# EUROPÄISCHE PATENTANMELDUNG

(11) **EP 1 787 701 A1**
(43) Veröffentlichungstag der Anmeldung: **23.05.2007**
(21) Anmeldenummer: 06450158.8
(22) Anmeldetag: 07.11.2006
(51) Int. Cl.: B01D 46/02, B01D 46/42

(54) **Filterschlauch-Stützkorbelement für eine Schlauchfilter-Anlage, sowie Verfahren zu dessen Herstellung**

(30) Priorität: 18.11.2005 AT 18822005
(71) Anmelder: Scheuch GmbH, 4971 Aurolzmünster (AT)
(72) Erfinder: Fliszar, Günther, 4786 Brunnenthal (AT)
(74) Vertreter: Weinzinger, Arnulf

(57) **Zusammenfassung**

Filterschlauch-Stützkorbelement (1) für eine Schlauchfilter-Anlage, mit mehreren Längsstäben (2), die mit voneinander beabstandeten Ringen (3) verbunden sind, wobei die Ringe (3) zur Außenseite hin offene nutartige Aufnahmevertiefungen (5) aufweisen, in denen die Längsstäbe (2) aufgenommen und gehalten sind.

## Beschreibung

Die Erfindung betrifft ein Filterschlauch-Stützkorbelement für eine Schlauchfilter-Anlage, mit mehreren Längsstäben, die mit voneinander beabstandeten Ringen verbunden sind.

Weiters bezieht sich die Erfindung auf ein Verfahren zur Herstellung eines solchen Filterschlauch-Stützkorbelements.

Schlauchfilteranlagen zur Filterung von mit Partikeln belasteter Luft oder dergleichen Gasen sind beispielsweise aus den Schriften DE 19 944 057 A, DE 32 27 712 A, US 3 747 307 A oder US 5 173 098 A bekannt. Dabei werden relativ lange (z.B. 6 m lange) Filterschläuche aus einem luftdurchlässigen, jedoch die Partikel zurückhaltenden Gewebe oder dergleichen Material außerhalb eines inneren Stützkorbs angebracht, und diese Schlauchfilter werden in einem abgeschlossenen Filtergehäuse befestigt; dem Inneren des Gehäuses wird die zu reinigende Luft zugeführt, wogegen das Innere der Filterschläuche über eine Absaugeinrichtung mit Unterdruck beaufschlagt wird. Dadurch wird die Luft aus dem Gehäuse-Raum unter Durchtritt durch die Filterschläuche abgesaugt, wobei sich die Partikel außen an den Filter-Schläuchen absetzen. Die Stützkörbe haben dabei die Funktion, die FilterSchläuche in ihrer beispielsweise allgemein zylindrischen oder prismatischen Form zu halten, wenn in ihrem Inneren der Unterdruck, relativ zum Gehäuse-Raum, erzeugt wird.

Üblicherweise bestehen die Stützkörbe (vgl. z.B. auch GB 1 532 302 A und EP 529 225 A) aus Längsstäben mit einer Länge entsprechend der Länge der Schlauchfilter. Diese Längsstäbe sind, im Stützkorb-Querschnitt gesehen, in der Regel kreisförmig (gegebenenfalls aber auch ungefähr oval, vgl. US 5 173 098 A) in gleichmäßigem Abstand längs des Innen-Umfanges des Schlauchfilters angeordnet und durch Ringe, die längs der Stäbe in gleichen Abständen, zum Beispiel von 30 cm, vorgesehen sind, zu einem korbartigen Gebilde verbunden. Bei den bekannten Stützkörben bestehen die Längsstäbe ebenso wie die Ringe aus Rundmaterial aus Stahl, wobei die Längsstäbe am Außenumfang der Ringe punktförmig durch Widerstandsschweißen befestigt sind. Von Nachteil ist bei dieser bekannten Konstruktion, dass beim Herstellen der Schweißverbindungen zwischen den Längsstäben und den Ringen eine exakte Positionierung erforderlich ist, wobei in der Regel die Geradheit der Längsstäbe beeinträchtigt wird, wenn die Positionierung nicht ganz exakt ist. Auch kann es zu einem Verziehen der Längsstäbe auf Grund der Wärmeeinbringung beim Schweißen kommen. Ein weiterer Nachteil ist, dass die Längsstäbe und Ringe üblicherweise aus einem verzinkten Stahl-Rundmaterial bestehen, wobei beim Schweißen an den Schweißstellen und benachbart denselben der Oberflächenschutz beschädigt wird, so dass der Stützkorb nach seiner Herstellung neuerlich verzinkt werden muss. Darüber hinaus hat sich gezeigt, dass relativ viele Schweißstellen nicht halten, beispielsweise in der Größenordnung von 0,1 %, wobei zu bedenken ist, dass pro Stützkorb z.B. 600 Schweißstellen oder mehr vorliegen können, was bedeutet, dass pro Stützkorb im Schnitt eine Fehlstelle zu erwarten ist.

Um die zahlreichen Schweißstellen zu vermeiden, wurde in der DE 27 51 476 A vorgeschlagen, Stützkorbelemente einteilig aus Kunststoff durch Spritzgießen herzustellen. Im Einzelnen werden dabei Korbabschnitte gespritzt, die stirnseitig ineinander gesteckt und durch Schnappverbindungen miteinander verbunden werden. Diese Herstellung von Stützkorbelementen aus Kunststoff ist jedoch ebenfalls aufwendig, auch wenn das exakte Positionieren von Längsstäben entfällt. Außerdem lässt hier die Festigkeit der Stützkörbe zu wünschen übrig.

Nachteilig bei dieser bekannten Stützkorb-Konstruktion, wie bei allen anderen bekannten Stützkörben, ist insbesondere auch, dass die Stützkörbe für zu errichtende Filteranlagen wegen der relativ komplizierten Herstellung (Punktschweißung oder Spritzgie-βen) zentral im vorhinein hergestellt und dann an den Ort der Filteranlage transportiert werden müssen; die Stützkörbe oder Korbabschnitte sind aber sperrige Gebilde, so dass sich große Transportvolumina - mit viel "Luft" - ergeben. Dabei bringt auch die Teilung der Stützkörbe in Korbabschnitte (vgl. außer der DE 27 51 476 A auch die WO 95/25579 A, die US 3 747 307 A und die US 5 173 098 A) keine Besserung der Situation.

Es ist nun Aufgabe der Erfindung, hier Abhilfe zu schaffen und eine neue Konstruktion eines Filter-Schlauch-Stützkorbelements sowie eine entsprechende Herstellungsweise für das Stützkorbelement und eine zugehörige Vorrichtung vorzuschlagen, wobei der Stützkorb, gegebenenfalls auch ein Korbabschnitt, der mit anderen zusammengesteckt wird, in einfacher Weise auch erst vor Ort aus den Ringen und Stäben fertiggestellt werden kann, so dass die Herstellung vereinfacht und überdies das Transportproblem gelöst wird, da bloß Längsstäbe und Ringe, also kompakt verpackbare Elemente, zu transportieren sind.

Zur Lösung der gestellten Aufgabe sieht die Erfindung ein Stützkorbelement wie in Anspruch 1, ein Herstellungsverfahren wie in Anspruch 10 angegeben vor. Vorteilhafte Ausführungsformen und Weiterbildungen sind in den Unteransprüchen definiert.

Unter "Stützkorbelement" wird hier ein kompletter Stützkorb ebenso wie ein Korbabschnitt als Teil eines Stützkorbes verstanden, der - wie aus dem Stand der Technik bekannt - mit anderen Korbabschnitten der Länge nach zusammengefügt wird, um den gesamten, z.B. sechs Meter langen Stützkorb zu erhalten. Es sei aber erwähnt, dass gemäß der vorliegenden Erfindung mit besonderem Vorteil einheitliche, ganze Stützkörbe, mit durchgehenden Längsstäben, hergestellt werden können, da die Herstellung der Stützkörbe oder Stützkorbelemente vor Ort erfolgen kann, da der Zusammenbau außerordentlich einfach, gegebenenfalls sogar händisch, ohne dass besondere Werkzeuge erforderlich wären, durchgeführt werden kann. Dadurch können beim Antransport die Längsstäbe und die Ringe noch getrennt voneinander verpackt werden, so dass sperrige Verpackungseinheiten vermieden werden können. Insofern spielen auch Längen von z.B. 6 m für die Längsstäbe keine Rolle.

Wie bereits erwähnt, müssen bekannte Stützkörbe in Produktionsanlagen fern von zu errichtenden Schlauchfilteranlagen vorproduziert und dann an die Stelle der Schlauchfilteranlagen transportiert werden. Für diesen Transport werden die Stützkörbe üblicherweise in Holzverschlägen oder speziellen Transportkörben untergebracht. Die Verpackungen sind bis zu 1,5 m hoch, wobei mehrere Lagen Stützkörbe übereinander gelagert werden. Beispielsweise liegt dann das Gewicht von 9 Lagen Stützkörben auf einer untersten Stützkorb-Lage auf. Durch Stoßbelastungen beim Verladen und Entladen und beim Transport selbst kommt es unweigerlich zu einem gewissen Prozentsatz an Schäden. Ebenso führt das Manipulieren beim Verpacken und Auspacken zu Beschädigungen. Weiters ist es im Hinblick auf längere Lagerungszeiten und längere Transportwege, etwa bei einem Transport auf Schiffen, notwendig, die Stützkörbe mit einem Korrosionsschutz zu beschichten, wobei Verzinken oder aber auch eine Lackbeschichtung üblich ist, abgesehen davon, dass die Stützkörbe gegebenenfalls in Seekisten verpackt werden müssen. Die damit verbundenen hohen Kosten für Verpackung und Transport, ebenso wie das Risiko der Beschädigung beim Handling und beim Transport und unter Umständen der Korrosionsschutz, der zumeist für den Betrieb in der Schlauchfilteranlage nicht notwendig ist, können bei Anwendung der erfindungsgemäßen Technik vermieden werden: Es kann ein Korrosions-geschütztes Halbzeug (verzinkte oder verkupferte Stäbe bzw. Ringe) in kompakten Verpackungseinheiten angeliefert werden, und vor Ort werden die Stützkörbe, zeitnah zum Einbauzeitpunkt, aus dem Halbzeug zusammengebaut. Dieses Halbzeug kann auch dadurch kostengünstig korrosionsgeschützt verpackt werden, dass es in einer Folie eingeschweißt wird, so dass sich, wenn dies für den Betrieb der Schlauchfilteranlage nicht notwendig ist, ein Anbringen eines Korrosionsschutzes in Form einer Verzinkung oder Verkupferung erübrigen kann. Der Verpackungsaufwand für den Transport des genannten Halbzeugs ist gering, so dass der Transport äußert kostengünstig wird. Die Verpackungsdichte (z.B. in kg/m³) erhöht sich auf diese Weise auf beispielsweise das Zwanzigfache, verglichen mit Stützkörben gemäß Stand der Technik. Auch daraus resultieren wesentlich geringere Verpackungs- und Versandkosten. Weiters entfällt praktisch das Risiko der Beschädigung beim Verpacken, Transportieren und Auspacken, da nur ein Handling von Stäben und Ringen, nicht aber von sperrigen, relativ zerbrechlichen Stützkörben erforderlich ist. Auch können die Stützkörbe dadurch, dass sie erst nach dem Transport zusammengebaut werden, aus Längsstäben und Ringen mit vergleichsweise geringen Querschnittsabmessungen erstellt werden, da die erwähnte Belastung beim Transport entfällt.

Bei den bekannten Stützkörben, die im fertiggestellten Zustand zum Ort der zu errichtenden Schlauchfilteranlage transportiert werden müssen, dürfen nämlich die Körbe, wenn sie transportiert werden, einander keine Schäden zufügen, wenn obenliegende Stützkörbe bei Stoßbelastungen etc. auf darunter befindliche Stützkörbe drücken. Aufgrund dessen ist für den Transport der Stützkörbe eine massivere Bauweise, mit größeren Querschnittsabmessungen der Ringe und Längsstäbe, notwendig, als es für den eigentlichen Filterbetrieb erforderlich wäre - beispielsweise würden für den Filterbetrieb Längsstäbe mit einem Durchmesser von 3 mm reichen, jedoch werden bei den bekannten Stützkörben Stabdurchmesser von 4 mm wegen der mechanischen Belastungen beim Transport benötigt. Beim erfindungsgemäßen Stützkorb, mit der speziellen Verbindungstechnik, wird eine Produktion vor Ort ermöglicht, und es kann daher, da keine Transportbeschädigungen von fertigen Stützkörben zu befürchten sind, eine leichtere Bauweise, beispielsweise mit den genannten Stabdurchmessern von 3 mm, realisiert werden.

Bei den bekannten Stützkörben sind weiters durch die unterschiedlichen Einschweißtiefen, die sowohl von den Kontaktverhältnissen beim Widerstandsschweißen als auch von den unterschiedlichen Materialverhältnissen pro Coil abhängen, Umfangstoleranzen von 1 mm bis 5 mm systembedingt vorgegeben. Diese Toleranzen haben Auswirkungen auf die Filterschläuche. Filterschläuche zur Abluftreinigung können je nach Betriebsanforderung in zwei Qualitäten eingeteilt werden: die normalen Qualitäten verfügen über eine ausreichende Elastizität, um die vorgenannten Umfangstoleranzen ausgleichen zu können. Wenn die Filterschläuche jedoch in einem höheren Temperaturbereich (150°C bis 200°C) eingesetzt werden sollen, sind für ihre Herstellung besondere Materialien, wie etwa Glasfaser, Kohlefaser oder dergleichen, erforderlich. Derartige Filterschläuche verfügen aber über eine geringe Elastizität, und sie müssen dann für jede Charge maßgeschneidert an die Stützkörbe angepasst werden. Beim erfindungsgemäßen Stützkorb kann jedoch aufgrund der neuen Verbindungstechnik zwischen den Längsstäben und Ringen eine Umfangsgenauigkeit von 0,5 mm eingehalten werden, so dass sich eine derartige individuelle Anpassung erübrigt.

Bei den erfindungsgemäßen Stützkörben bzw. Stützkorbelementen können die Längsstäbe in den Aufnahmevertiefungen kraft- bzw. reibschlüssig, gegebenenfalls auch zum Teil formschlüssig, in einen Presssitz oder Klemmsitz, gegebenenfalls unter Einschnappen im Fall von hinterschnittenen Aufnahmevertiefungen, fixiert sein. Die Längsstäbe werden in die Aufnahmevertiefungen einfach eingedrückt, wobei aber gegebenenfalls die Ränder der Aufnahmevertiefungen in ihren Mündungs- oder Öffnungsbereich an die jeweiligen Längsstäbe unter plastischer Verformung, etwa in Form eines Quetschens, angedrückt werden können. Die Ringe sind außen möglichst rund ausgebildet, um so die aufgeschobenen Filterschläuche zu schonen. Um besonders lange (in Axialrichtung gesehen) Verbindungsstellen zu erhalten und eine automatische gute Positionierung der Längsstäbe an den Ringen zu sichern, ist es von besonderem Vorteil, wenn die Ringe aus Flachmaterial, insbesondere aus Stahl oder dergleichen Metall, gebildet werden. In diesen Ringen sind die nutenförmigen Aufnahmevertiefungen durch sickenartiges Ausbiegen hergestellt. Im Fall von solchen Flachmaterial-Ringen können einfach die oberen und unteren Ringränder einwärts gebogen sein, um so die Filterschläuche zu schonen, d.h. ihren Kontakt mit scharfen Kanten zu vermeiden. Weiters hat sich eine verschränkte Anordnung der länglichen Nuten in den Ringen für eine besonders stabile Fixierung der Längsstäbe als günstig erwiesen: es können die Nuten bzw. nutartigen Aufnahmevertiefungen eine Längsachse quer zur Ringebene aufweisen, die um einen geringfügigen Winkel, z.B. um 1° bis 2°, zu einer achsparallelen Linie, also zu einer durch die Mitte der jeweiligen Aufnahmevertiefung verlaufenden Stützkorb-Axialebene, geneigt ist. Die Neigung kann dabei abwechselnd von Aufnahmevertiefung zu Aufnahmevertiefung in die eine Richtung und in die andere Richtung sein.

Die Erfindung wird nun nachfolgend anhand von besonders bevorzugten Ausführungsbeispielen, auf die sie jedoch nicht beschränkt sein soll, und unter Bezugnahme auf die Zeichnung noch näher erläutert.

In der Zeichnung zeigen im Einzelnen:
Fig. 1 einen Teil eines Stützkorbes gemäß der Erfindung in schaubildlicher Darstellung;
Fig. 2 eine Ansicht eines solchen Abschnitts eines Stützkorbes;
Fig. 3 eine Stirnansicht dieses Stützkorbes;
Fig. 4 das in Fig. 3 angedeutete Detail IV in größerem Maßstab, zur Veranschaulichung der Lage eines Längsstabes in einer nutförmigen Vertiefung eines Ringes;
Fig. 5 eine Ansicht eines Ringes mit nutartigen Aufnahmevertiefungen, ohne Längsstäbe;
Fig. 6 eine Draufsicht auf diesen Ring gemäß Fig. 5;
Fig. 7 das Detail gemäß VII in Fig. 6 in größerem Maßstab;
Fig. 8 eine schaubildliche Ansicht eines solchen Ringes mit nutartigen Aufnahmevertiefungen;
Fig. 9 einen Schnitt durch einen Flachmaterial-Ring, etwa gemäß der Linie IX-IX in Fig. 6, wobei der Ring mit einwärts gebogenen oberen und unteren Rändern gezeigt ist;
Fig. 10 in vergrößertem Maßstab, verglichen mit Fig. 5, eine Ansicht eines Teiles eines Ringes, hier mit schräg gestellten (verschränkten) nutartigen Aufnahmevertiefungen; und die
Fig. 11 und 12 Querschnitte durch Ringe gemäß modifizierten Ausführungsformen.

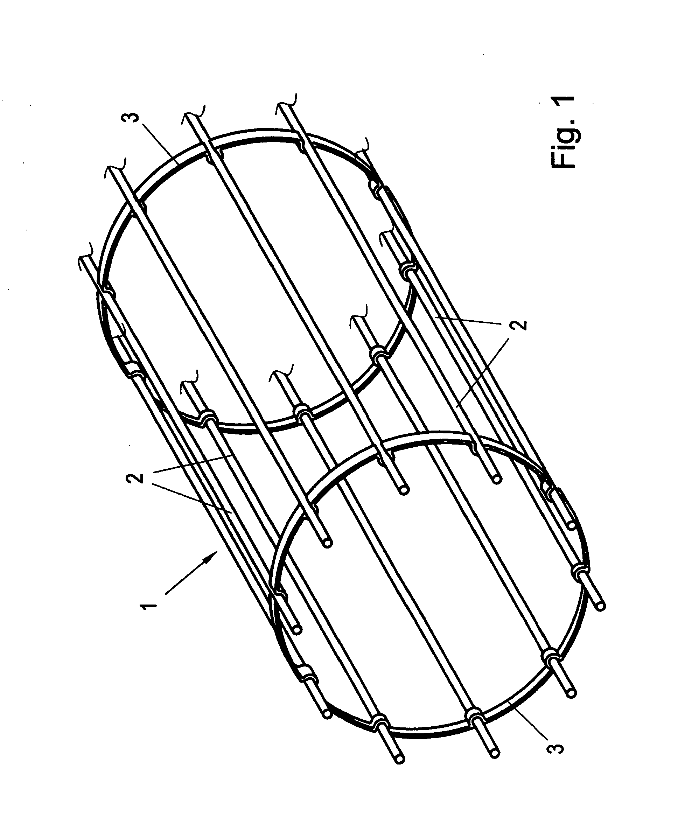

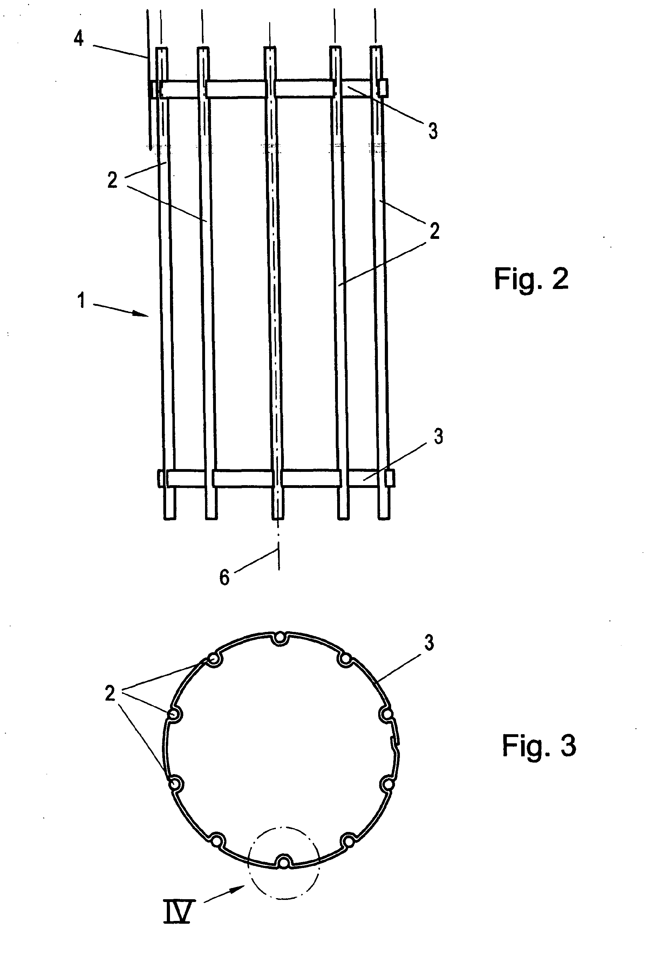

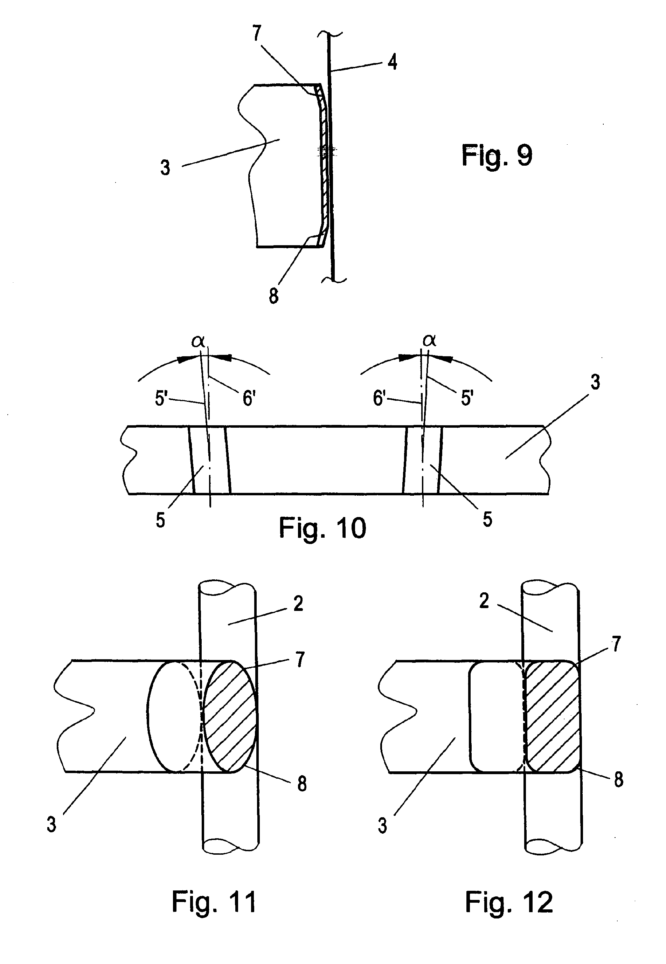

In Fig. 1 ist schaubildlich ein Abschnitt oder Teil eines Filterschlauch-Stützkorbes 1 gezeigt, der aus zueinander parallelen Längsstäben 2 und zu den Längsstäben 2 mit ihren Ringebenen quer angeordneten (Verbindungs-) Ringen 3 aufgebaut ist. Auf derartigen Stützkörben 1 werden für den Betrieb in Schlauchfilteranlagen Filterschläuche aufgezogen, und in Fig. 2 (sowie auch in Fig. 9) ist nur ganz schematisch in einem Teilbereich ein derartiger Filterschlauch 4 angedeutet.

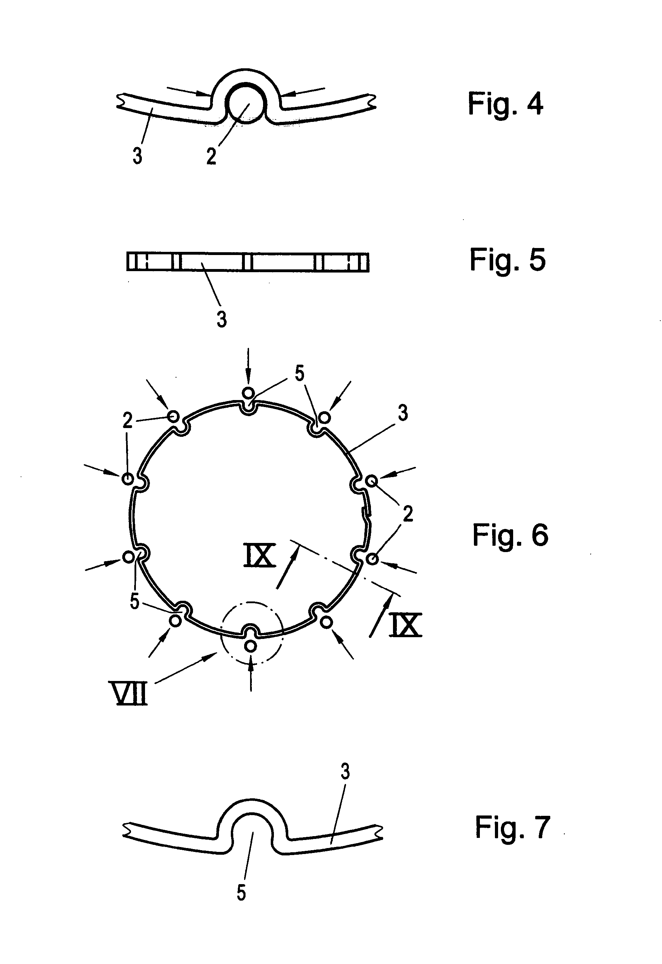

Im Einzelnen bestehen die Ringe 3 gemäß Fig. 1 bis 9 aus Flachmaterial, Bandmaterial oder dergleichen, mit einer Breite (Höhe) von beispielsweise 10 mm. Diese Ringe 3 haben über ihren Umfang verteilt achsparallele nutartige Aufnahmevertiefungen 5, nachstehend auch kurz Nuten 5 genannt, die beispielsweise im Fall der Verwendung von metallischen Flachmaterialien für die Ringe 3 durch Biegen, Drücken oder Prägen der Ringe 3 geformt werden, vgl. außer Fig. 5 und 6 insbesondere auch Fig. 7 und 9. Diese achsparallelen Vertiefungen 5 dienen zur Aufnahme der Längsstäbe 2, wobei die Längsstäbe 2 in diese Nuten oder Vertiefungen 5 einfach eingepresst oder eingedrückt und so mechanisch durch einen Press- oder Klemmsitz bzw. Schnappsitz fixiert werden, vgl. Fig. 3 und 4. Die achsparallelen Nuten 5 erbringen dabei eine Längsführung für die Längsstäbe 2, so dass bei der Herstellung des Stützkorbes 1 eine gewisse Selbstausrichtung der Längsstäbe 2 parallel zur Längsachse 6 (Fig. 2) des Stützkorbes 1 erzielt wird. Auch wird durch diese Längsführung und reibungsschlüssige Fixierung der Längsstäbe 2 in den sich längs erstreckenden Nuten 5 eine stabile Befestigung auf einer jeweils relativ langen Verbindungsstelle (beispielsweise 10 mm), verglichen mit der Punktschweißung bei den bekannten Stützkörben, erzielt.

Die Verbindung zwischen den Ringen 3 und den Längsstäben 2, die insbesondere wie erwähnt durch Eindrücken, Einpressen bzw. Einschnappen der Stäbe 2 in die Nuten 5, gegebenenfalls auch durch plastisches Verformen der Nut-Randbereiche um Umfangsbereiche der Stäbe 2 herum, bewerkstelligt wird, ist außerordentlich einfach auszuführen und kann auch von wenig geschulten Personen problemlos bewerkstelligt werden. Fehler bei der Herstellung dieser Verbindungen sind praktisch ausgeschlossen. Weiters ist auch von Vorteil, dass bei dieser Ausbildung und Herstellung von Filterschlauch-Stützkörben 1 ein vorhandener Oberflächenschutz (Korrosionsschutz) nicht beschädigt wird - der übliche Korrosionsschutz (z.B. durch Verzinken) hält ohne Weiteres einem derartigen Eindrücken der Längsstäbe 2 in die Nuten 5 der Ringe 3 stand.

Dadurch, dass die Längsstäbe 2 in die Nuten 5 eingedrückt werden, der jeweilige Flachmaterial-Ring 3 somit gemäß einem größeren Durchmesser verläuft als die Innenseite des Bodens der Nuten 5 und somit auch als die Innenseite der Längsstäbe (vgl. Fig. 3 und 4), ergibt sich eine im Vergleich zu den innenliegenden Rundmaterial-Ringen gemäß Stand der Technik größere freie Luftdurchtrittsfläche bei gleich großem Filterschlauch-Querschnitt.

Andererseits ist von Vorteil, dass an der Außenseite der Ringe 3 dadurch, dass die Längsstäbe 2 in den Nuten 5 aufgenommen sind, eine praktisch bündige Zylinderfläche ohne vorstehende Teile erhalten wird, so dass die Filterschläuche 4 problemlos aufgezogen werden können, ohne dass sie lokal ausgebauch werden.

Die beschriebene Konstruktion führt somit zu einer beträchtlichen Reduktion der Kosten bei der Herstellung der Stützkörbe 1 und demgemäß bei der Herstellung von Schlauchfilteranlagen insgesamt.

Ein besonderer Vorteil ist weiters darin zu sehen, dass zufolge der einfachen Herstellung der Stützkörbe 1 ausgehend von den vorgefertigten Ringen 3 aus Flachmaterial, mit den eingeformten Nuten 5, und von den vorgefertigten Längsstäben 2 auch eine Herstellung der Stützkörbe 1 vor Ort, bei der Errichtung von Filteranlagen am Anlage-Ort, möglich ist. Dagegen war wie erwähnt bei den bekannten Stützkörben eine zentrale Herstellung derselben sowie deren Auslieferung an den Ort der Filteranlage erforderlich, wobei durch die sperrigen Stützkörbe ein beträchtliches Transportproblem zu gewärtigen war, wenn man berücksichtigt, dass beispielsweise für eine Filteranlage 10.000 Filterschläuche, demgemäß 10.000 Stützkörbe, erforderlich sein können. Bei Anwendung der vorliegenden Technik können nun einfach die Längsstäbe und die Ringe noch unverbunden angeliefert werden, wobei kompakte Verpackungen und kleine Transportvolumina möglich sind.

Die Ringe 3 können bei der vorgeschlagenen Technik außer aus Metall-Flachmaterial beispielsweise auch als (Kunststoff-) Spritzgussteile hergestellt sein. Die Ringe 3 bzw. Stützkörbe 4 können einen Durchmesser in der Größenordnung von 120 bis 200 mm aufweisen; die Längsstäbe 2 haben üblicherweise eine Länge von 4 bis 6 m, und die Ringe 3 sind in der Regel in Abständen von 30 cm voneinander angebracht. Die Längsstäbe 2 können bei der vorgeschlagenen Technik wie bisher aus einem Rundmaterial, beispielsweise mit einem Durchmesser von 2 bis 4 mm, insbesondere 3 mm, hergestellt sein.

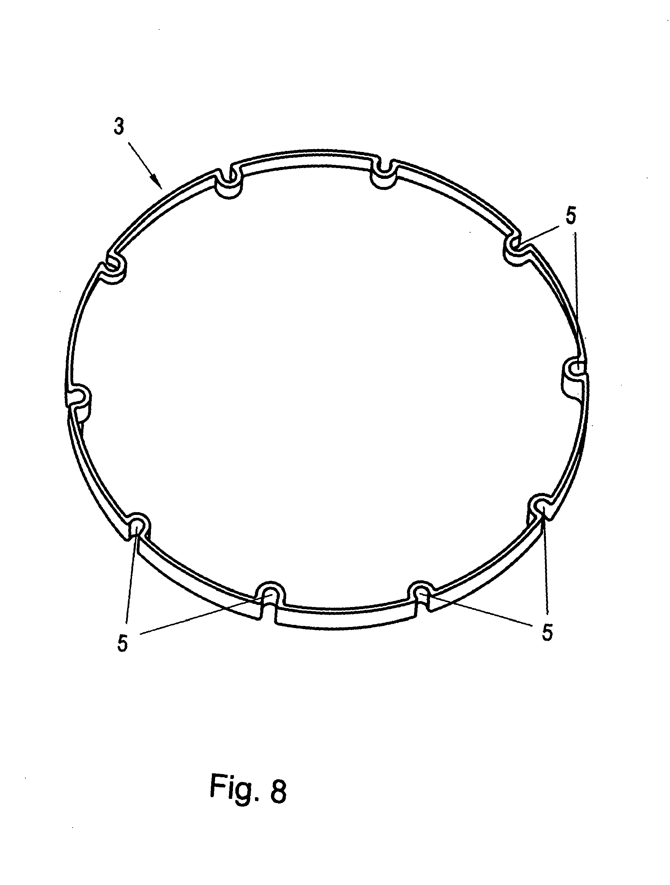

Zur Schonung der Filterschläuche 4 können die Flach-Ringe 3 an ihren oberen und unteren Rändern einwärts gebördelt, gebogen oder abgeschrägt sein, vgl. Fig. 8, in der schematisch ein Querschnitt eines Flachmaterial-Ringes 3 (ohne Nuten) mit einwärts gebogenen Rändern 7, 8 gezeigt ist. Ein Teil eines Filterschlauches 4 ist in Fig. 8 ebenfalls (im Längsschnitt) angedeutet.

Eine schonende Behandlung der Filterschläuche 4 durch abgerundete Ränder bzw. Kanten des Ringes 3 kann auch erzielt werden, wenn der Ring 3 im Querschnitt eine entsprechend gerundete Form in den Kantenbereichen aufweist, wie etwa gemäß Fig. 11, wo eine länglich-ovale Querschnittsform für den Ring 3 ersichtlich ist, oder aber gemäß Fig. 12, wo eine mehr rechteckige Querschnittsform des Ringes 3 gezeigt ist, jedoch mit Abrundungen in den vier Eckbereichen oder Kantenbereichen. Wesentlich ist auch hier, dass an der Außenseite abgerundete Kantenbereiche 7, 8 vorliegen.

Aus Fig. 10 ist schließlich noch in einer schematischen Ansicht eines Teiles eines Ringes 3 ersichtlich, dass die Nuten 5 im Vergleich zu achsparallelen Linien bzw. durch die Nutenmitten verlaufende Axialebenen 6' mit ihren mittigen Längsachsen 5' geringfügig, etwa um einen Winkel α=1° bis 2°, schräg gestellt sind. Dadurch wird eine verstärkte Klemmwirkung oder ein verstärkter Presssitz der Längsstäbe 2 in den Nuten oder allgemein Aufnahmevertiefungen 5 erhalten. Wie dabei aus Fig. 10 weiters ersichtlich ist, können die Schrägstellungen der Nuten 5 abwechselnd in der einen Richtung und in der anderen Richtung vorliegen, um so bei benachbarten Ringen 3 auch entgegengesetzte Neigungen von fluchtenden Nuten 5 für die verstärkte Fixierung der Längsstäbe 2 an den Ringen 3 nützen zu können.

## Patentansprüche

1. Filterschlauch-Stützkorbelement (1) für eine Schlauchfilter-Anlage, mit mehreren Längsstäben (2), die mit voneinander beabstandeten Ringen (3) verbunden sind, **dadurch gekennzeichnet, dass** die Ringe (3) zur Außenseite hin offene nutartige Aufnahmevertiefungen (5) aufweisen, in denen die Längsstäbe (2)aufgenommen und gehalten sind.

2. Stützkorbelement nach Anspruch 1, **dadurch gekennzeichnet, dass** die Längsstäbe (2) in die Aufnahmevertiefungen (5) in einen Presssitz eingedrückt sind.

3. Stützkorbelement nach Anspruch 1 oder 2, **dadurch gekennzeichnet, dass** die Aufnahmevertiefungen (5) eine verengte äußere Mündung aufweisen.

4. Stützkorbelement nach Anspruch 3, **dadurch gekennzeichnet, dass** die Ränder der Aufnahmevertiefungen (5) im Mündungsbereich an die Längsstäbe (2) unter Verformung, z.B. Quetschen, angedrückt sind.

5. Stützkorbelement nach einem der Ansprüche 1 bis 4, **dadurch gekennzeichnet, dass** die Ringe (3) zumindest an der dem Filterschlauch (4) zuzuwendenden Außenseite oben und unten abgerundet sind.

6. Stützkorbelement nach einem der Ansprüche 1 bis 5, **dadurch gekennzeichnet, dass** die Ringe (3) aus Flachmaterial gebildet sind, in denen die nutartigen Aufnahmevertiefungen (5) sickenartig ausgebogen sind.

7. Stützkorbelement nach Anspruch 5 und 6, **dadurch gekennzeichnet, dass** die Flachmaterial-Ringe (3) an ihren oberen und unteren Rändern (7,8) einwärts gebogen sind.

8. Stützkorbelement nach Anspruch 6 und 7, **dadurch gekennzeichnet, dass** die nutartigen Aufnahmevertiefungen (5) eine Längsachse (5') quer zur Ringebene aufweisen, die geringfügig, z.B. um 1° bis 2°, zu einer durch die Mitte der jeweiligen Aufnahmevertiefung (5) verlaufenden Stützkorb-Axialebene (6') geneigt ist.

9. Stützkorbelement nach Anspruch 8, **dadurch gekennzeichnet, dass** die Längsachsen (5') von in Umfangsrichtung aufeinanderfolgenden Aufnahmevertiefungen (5) abwechselnd in die eine und die andere Richtung relativ zur jeweiligen Axialebene geneigt sind.

10. Verfahren zur Herstellung eines Filterschlauch-Stützkorbelements für eine Schlauchfilteranlage, wobei das Stützkorbelement (1) mehrere Längsstäbe (2) aufweist, die mit von einander beabstandeten Ringen (3) verbunden sind, **dadurch gekennzeichnet, dass** die Ringe (3) an den Stellen, wo sie mit den Längsstäben (2) verbunden werden, mit zur Außenseite hin offenen nutartigen Aufnahmevertiefungen (5) geformt werden und die Längsstäbe (2) in die zugehörigen Aufnahmevertiefungen (5) eingesetzt und fixiert werden.

11. Verfahren nach Anspruch 10, **dadurch gekennzeichnet, dass** die Längsstäbe (2) in die Aufnahmevertiefungen (5) eingedrückt werden.

12. Verfahren nach Anspruch 10 oder 11, **dadurch gekennzeichnet, dass** die Ränder der Aufnahmevertiefungen (5) in deren Mündungsbereich nach dem Einsetzen der Längsstäbe (2) an letztere, z.B. durch Quetschen, angedrückt werden.
